# EUROPEAN PATENT SPECIFICATION

(11) **EP 2 810 701 B1**
(45) Date of publication and mention of the grant of the patent: **12.02.2020**
(21) Application number: 14169431.5
(22) Date of filing: 22.05.2014
(51) Int. Cl.: B01D 33/21

(54) **FILTRATION DISCS WITH A ROTATABLY MOUNTED CENTRAL TUBE**
FILTERSCHEIBEM MIT EINEM DREHBAR GELAGERTEN ZENTRALROHR
DISQUES DE FILTRATION AVEC UN TUBE CENTRAL MONTÉ À ROTATION

(30) Priority: 04.06.2013 CZ 20130418
(43) Date of publication of application: 10.12.2014
(73) Proprietor: IN - EKO Team s.r.o., 62100 Brno (CZ)
(72) Inventor: STRNAD, Josef, 62100 Brno (CZ)
(74) Representative: Musil, Dobroslav

(56) References cited:
- EP-A1- 1 596 958
- JP-A- 2005 270 808
- KR-A- 20100 117 828
- US-A- 5 853 585
- US-B1- 6 868 973

## Description

### Technical field

The invention relates to disc filter as described in the claims.

### Background art

Disc filters are advantageous especially because of a favourable relationship between the size of the filtration area and the built-up dimensions. Disc filters, hereinafter referred to as "disc filters", are generally known, for example, from EP 1 596 958, WO 2009/011862 and others.

The principle of disc filters consists in that the fluid to be filtered flows into the inner space of a central tube, for example waste water, which flows into the inner space of the filtration elements through openings in a cylindrical body of the central tube, the filtration elements being located in a radial direction along the circumference of the central tube and constituting a "filtration disc" or a row of filtration discs. The filtration elements are provided with filtration surfaces through which the fluid being filtered flows to be further use after exiting the filter. Impurities captured by the filtration surfaces are by means of permanent or periodic rotation of the central tube about its longitudinal axis carried up above the level of the fluid being filtered in the central tube and are moving either spontaneously, or are transferred, with the aid of spraying, to a discharge channel of solid impurities

The central tube of the disc filter is in the known examples of embodiment rotatably mounted in roller or friction bearings, which are due to the structure of the known filters arranged below the level of the fluid being filtered and so they are exposed to the negative effects of water as such, and, in addition, can also be fouled by impurities etc., which increases probability that a failure occurs and also frequency of occurrence of a defect or a failure. Another disadvantage is that the existing bearings for a rotatable mounting of the central tube are arranged in the axis of the central tube rotation, where they are fixedly attached by means of a system of radial spoke, which, on the one hand, limit the flow of the fluid being filtered to the central tube and, on the other hand, cause impurities, such as hair etc., to be captured on individual spoke, which particularly affects and limits the flow of the filtered fluid to the central tube. Although it is possible to reduce unfavourable working conditions by sealing devices and lubrication, this is associated with environmental hazards, such as the risk of lubricant leakage into water, etc. Furthermore, the sealing devices of the bearings are fault-prone. In the event of a failure of the mounting of the central tube, the filter is inactive with all the negative effects of this state and, moreover, repairing the existing embodiments of the mounting is demanding and expensive.

EP1596958 A1 describes a solution, which requires necessarily a central bearing on the tube, which is essential when the tube is hung on a belt girded around one pulley with the purpose of eliminating the pressure of the water flowing into the tube, but also, more importantly, for eliminating the swaying motion of the tube and the whole rotatable part of the filter in the perpendicular direction to the longitudinal axis of the tube. In addition, this central bearing is flooded with water, which brings about further complications in terms of durability etc. Another disadvantage is unfavourable distribution of forces in the belts girded only around one pulley above the central tube, which leads to increased load of the belts by the weight of the rotatable part of the filter itself and also by the weight of the water which has flown into the tube and the filter.This increased load of the belts results in reducing the maximum possible size of the filter, i.e. reducing the maximum filtering capacity obtainable per filtering unit.

US5853585 describes a solution where the central tube is mounted at both ends on a pair of pulleys, but here both ends of the tube are mounted directly on the surface of the two pulleys, which means that substantially the edge collar of the tube rolls directly on the pair of pulleys, which causes problems in the filter construction and assembly.

The aim of the invention is to eliminate or at least to reduce the disadvantages of the background art, especially to improve the durability of rotatable mounting of the central tube of a disc filter while maintaining its full functionality and capacity.

### Principle of the invention

The goal of the invention is achieved by a disc filter with rotatably mounted central tube whose principle consists in that each of the endless drive belts is girded around two pulleys and only one of these four pulleys is coupled with a drive.

This solution provides a reliable rotatable mounting of the central tube of a disc filter without the filtered fluid influencing negatively the components of the mounting, since there is no rolling drag or friction between the central tube and the drive belt, and therefore there is minimal wear and also possible deposits of impurities on the surface of the tube as well as on the belts do not pose any major problems.

### Description of drawings

The invention is schematically shown in the drawings, where Fig. 1 shows a view of a lateral side of an example of embodiment of arrangement of mounting of the central tube of a disc filter according to the invention, Fig. 2 represents a view of the front side of an example of embodiment of an arrangement of a mounting of the central tube of a disc filter according to the invention, Fig. 3 shows a top view of an example of embodiment of an arrangement of a mounting of the central tube of a disc filter according to the invention, Fig. 4 shows a variation of a mounting of the central tube of a disc filter outside of the scope of the invention and Fig. 5 represents another variation outside of the scope of the invention of a mounting of the central tube with an eccentrically mounted pulley and the position of the central tube being secured by a pressure roller.

### Specific description

The invention will be described using an example of embodiment of a disc filter.

The central tube **1** of a disc filter is rotatably mounted in the structure of the filter, such as in the frame in a concrete channel or in the body of a bathtub in which the filter has been installed. The central tube **1** is at both ends girded along its outer circumference by an endless drive belt **2**, which is further girded around at least one pulley **3.** In the illustrated embodiment the central tube **1** is girded by both endless drive belts **2** directly on the outer surface of its cylindrical body. In an unillustrated example of embodiment at least at one end of the central tube **1** on the outer surface of the cylindrical body of the central tube **1** is formed as a guiding surface, which is, if needed, provided also with guiding rims or is formed as a groove for guiding endless drive belts **2.** In another unillustrated example of embodiment one end of the central tube **1** is girded on its outer surface directly by the endless drive belt **2,** whereby at the other end of the central tube **1** a guiding surface, girded by the other endless drive belt **2,** is formed.

The pulleys **3** are mounted in the structure of the filter rotatably about an axis which is parallel with the axis **O** of rotation of the central tube **1** and are located at a level above the maximum height of the level of the fluid being filtered in the filter, preferably above the upper outline of the central tube **1,** as is shown in the figures. One of the pulleys **3** is coupled with an unillustrated drive, such as an electric motor, through an unillustrated gear box, etc. Preferably, the pulleys **3** are mounted in the structure of the filter mutually independently, i.e. each of the pulleys **3** is mounted in the structure of the filter separately and independently of the other pulleys **3.** The pulleys **3** have the so called "embossed" guiding surface of the endless drive belts **2,** which ensures the side position stability of the endless drive belts **2** on the pulleys **3.** Also the pulleys **3** can be in case of need or for the purpose of increasing the safety of guiding the endless drive belts **2** provided with guiding rims which transform the guiding surfaces of the pulleys **3** into guiding grooves.

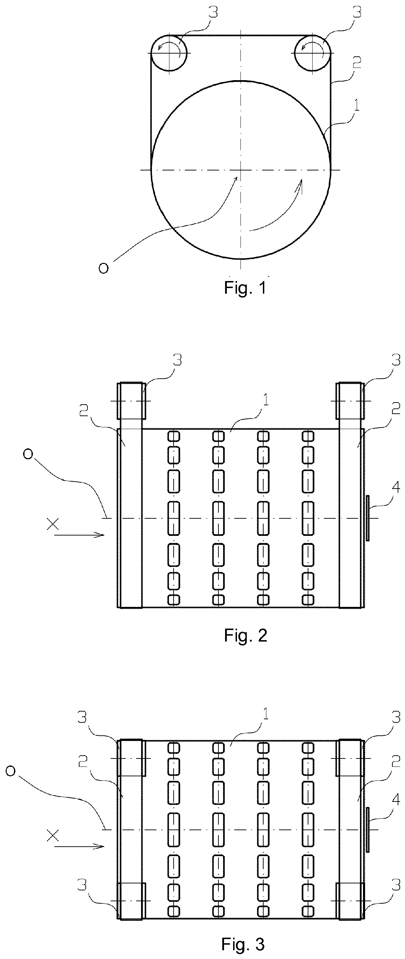

According to the invention and as shown in Fig. 1 to 3, each of the endless drive belts **2** is girded around two pulleys **3,** only one of these four pulleys **3** being coupled with a drive.

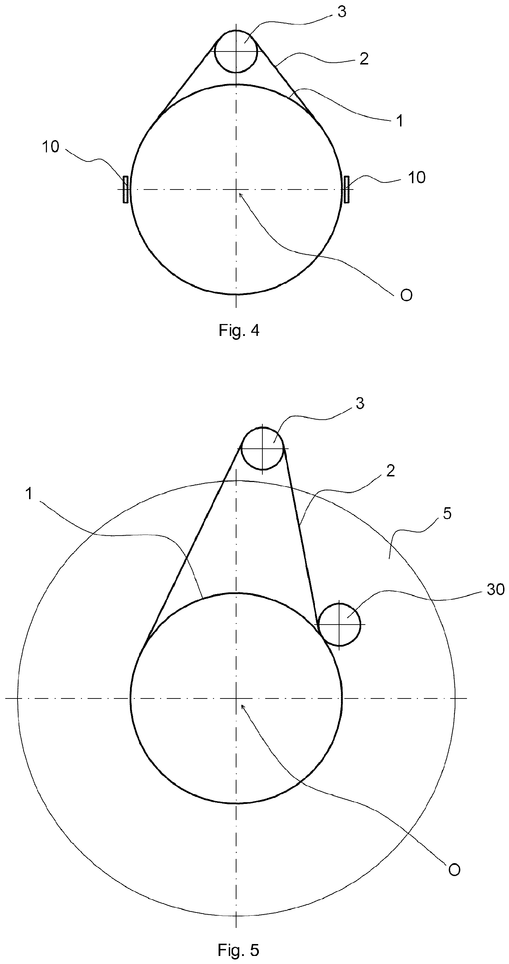

In the example outside of the scope of the invention shown in Fig. 4, each of the endless drive belts **2** is girded only around one pulley **3** and only one of these two pulleys **3** is coupled with a drive, whereby restrictors **10** of the movement of the central tube **1** are aligned on both sides with the central tube **1.**

Fig. 1 to 4 do not represent a filter disc, the filter disc is shown only in Fig. 5.

In the example outside of the scope of the invention shown in Fig. 5, each of the endless drive belts **2** is girded around one pulley **3,** which is rotatably mounted above the central tube **1** eccentrically in relation to the central tube **1.** The position of the central tube **1** is secured by a pressure roll **30,** which is rotatably mounted in the structure of the filter, whereby, from the side, it keeps the central tube **1** in a required position before the central tube **1** shifts spontaneously directly downwards below the pulley **3**. Preferably, in this example of embodiment at least one of the pulleys **3** is coupled with a drive. Also, in this example of embodiment, the outer outline of the filter disc **5** is indicated, which shows that the pulleys **3** can be mounted in the structure of the filter either mutually independently or they can be rotatably mounted on a common rotatable shaft or on a common rotatable tube or they can be rotatably mounted on a common rigid tube or bar etc.

Apparently, using two and more pulleys **3** for mounting each of the belts **2** provides better stability of the central tube **1** and, last but not least, it is also more favourable with respect to distribution of the load of the bearings of the pulleys **3** amongst more elements.

If necessary, so as to retain the axial forces, such as those from the filtered fluid flowing into the central tube **1** in a direction of the arrow **X** in Fig. 2 and 3, the central tube **1** is aligned with a suitable technical element, e.g. an axial bearing **4.** This technical element does not necessarily have to be located in the axis **O** of rotation of the central tube **1.**

## Claims

1. A disc filter with rotatable mounted central tube (1), the central tube (1) having at least one row of radially along the circumference of the tube (1) arranged filtration elements constituting a filtration disc (5), while the central tube (1) is at both ends hung on an endless drive belt (2) and each of the drive belts (2) is girded around pulleys (3) above the level of the maximum height of the fluid being filtered, the pulleys (3) being rotatably mounted in the structure of the filter, **characterized by that** each of the endless drive belts (2) is girded around two pulleys (3) and only one of these four pulleys (3) is coupled with a drive.

2. A disc filter according to Claim 1, **characterized by that** the central tube (1) is girded by both endless drive belts (2) directly on the outer surface of its cylindrical body.

3. A disc filter according to Claim1, **characterized by that** the central tube (1) is provided on the outer surface of its cylindrical body with a guiding surface for guiding the endless drive belts (2).

4. A disc filter according to any of Claims 1 to 3, **characterized by that** the pulleys (3) are rotatably mounted about an axis parallel with the axis (O) of rotation of the central tube (1) and are located at a level above the maximum height of the level of the fluid being filtered in the filter.

5. A disc filter according to any of Claims 1 to 4, **characterized by that,** the pulleys (3) are mounted in the structure of the filter mutually independently.

## Patentansprüche

1. Scheibenfilter mit einem drehbar gelagerten Mittelrohr (1), wobei das Mittelrohr (1) mindestens eine Reihe der radial auf dem Umfang des Rohres (11) gelagerten Filtrationselemente aufweist, die eine Filtrationsscheibe (5) bilden, wobei das Mittelrohr (1) an beiden seiner Enden auf einem endlosen Antriebsband (2) aufgehängt ist und jedes der Antriebsbänder (2) um die Rollen (3) herum oberhalb des Niveaus der maximalen Höhe des Spiegels der zu filternden Flüssigkeit im Filter umschlungen ist, die Rollen (3) in der Filterkonstruktion drehbar gelagert sind, **dadurch gekennzeichnet, dass** jedes der endlosen Antriebsbänder (2) um zwei Rollen (3) herum umschlungen ist und nur eine einzige dieser vier Rollen (3) mit einem Antrieb verkoppelt ist.

2. Scheibenfilter nach dem Anspruch 1, **dadurch gekennzeichnet, dass** das Mittelrohr (1) mit beiden endlosen Antriebsbändern (2) direkt auf der Außenoberfläche seines zylindrischen Mantels umschlungen ist.

3. Scheibenfilter nach dem Anspruch 1, **dadurch gekennzeichnet, dass** das Mittelrohr (1) auf der Außenoberfläche seines zylindrischen Mantels eine Führungsfläche zur Führung von endlosen Antriebsbändern (2) aufweist.

4. Scheibenfilter nach einem der Ansprüche 1 bis 3, **dadurch gekennzeichnet, dass** die Rollen (3) um die Achse herum drehbar gelagert sind, die mit der Drehachse (O) des Mittelrohres (1) parallel laufend ist, und im Niveau oberhalb der maximalen Höhe des Spiegels der zu filternden Flüssigkeit im Filter situiert sind.

5. Scheibenfilter nach einem der Ansprüche 1 bis 4, **dadurch gekennzeichnet, dass** die Rollen (3) in der Filterkonstruktion gegenseitig unabhängig gelagert sind.

## Revendications

1. Filtre à disque avec le tube central monté rotatif (1), tandis que le tube central (1) comprend au moins une rangée d'éléments filtrants disposés radialement à la périphérie du tube (11) formants un disque filtrant (5), tandis que le tube central (1) est suspendu à ses deux extrémités sur une courroie d'entraînement sans fin (2) et chacune des courroies d'entraînement sans fin (2) est ceinturée autour des poulies (3) au-dessus du niveau maximum du fluide filtré dans le filtre, les poulies (3) sont montées rotatifs dans une structure du filtre, **caractérisé en ce que** chacune des courroies d'entraînement sans fin (2) est ceinturée autour de deux poulies (3) et une seule de ces quatre poulies (3) est couplée à l'entraînement.

2. Filtre à disque selon la revendication 1, **caractérisé en ce que** le tube central (1) est ceinturée directement sur la surface extérieure de sa coque cylindrique par les deux courroies d'entraînement sans fin (2).

3. Filtre à disque selon la revendication 1, **caractérisé en ce que** le tube central (1) est pourvu sur la surface extérieure de sa coque cylindrique d'une surface de guidage pour guider les courroies d'entraînement sans fin (2).

4. Filtre à disque selon l'une quelconque des revendications 1 à 3, **caractérisé en ce que** les poulies (3) sont montés rotatifs autour d'un axe parallèle à l'axe de rotation (O) du tube central (1) et elles sont situées à un niveau supérieur au niveau maximum du fluide filtré dans le filtre.

5. Filtre à disque selon l'une quelconque des revendications 1 à 4, **caractérisé en ce que** les poulies (3) sont montées indépendamment les uns des autres dans la structure du filtre.
